# EUROPEAN PATENT APPLICATION

(11) **EP 4 838 181 A1**
(43) Date of publication of application: **11.11.2026**
(21) Application number: 25174798.6
(22) Date of filing: 07.05.2025
(51) Int. Cl.: G01F 1/58, G01F 1/86, G01F 15/02, G01N 9/00

(54) **MULTIFUNCTIONAL FLOW MEASURING SYSTEM**

(71) Applicant: ABB SCHWEIZ AG, 5400 Baden (CH)
(72) Inventor: HORST, Georg, 37154 Northeim (DE); GOTTHARDT, Frank, 37077 Göttingen (DE)
(74) Representative: Maiwald GmbH

(57) **Abstract**

The invention relates to a multifunctional flow measuring system (100), which comprises a volumetric flow measuring assembly (110) that comprises a measuring tube (150) for connecting to a piping system (50) and is configured to measure a volumic flow rate of a medium in the piping system (50), a density sensing assembly (120) that is configured to measure a density of the medium in the piping system (50), and an evaluation unit that is configured to determine, based on the volumic flow rate of the medium measured by the electromagnetic flow measuring assembly (110) and the density of the medium measured by the density sensing assembly (120), a mass flow rate of the medium in the piping system (50). The multifunctional flow measuring system (100) may further comprise a temperature sensing assembly (130), which is configured to measure a temperature of the medium in the piping system (50).

## Description

### FIELD OF INVENTION

The present disclosure relates to automated process control. In particular, the present disclosure relates to a multifunctional flow measuring system, the use of a multifunctional flow measuring system for real-time monitoring, and a method for monitoring a medium in a piping system.

### BACKGROUND

Industrial automation systems may provide productive and cost-efficient solutions for various applications for modern continuous, batch and discrete processes. Different measuring principles are currently used in industrial flow measurement depending on the medium to be measured. For example, in industrial fluid monitoring systems, electromagnetic flowmeters are widely used for volumetric flow rate measurements. Alternatively, in order to measure mass flow, complex and costly Coriolis meters may typically be used, which may allow parallel parameter determination. Especially, an accurate mass flow measurement may particularly be relevant. The conventional Coriolis devices may have limitations of, for example, introduced pressure loss, increased process costs due to the complex mechanical structure along with the extensive calibration processes and require longer installation lengths.

### SUMMARY

It may be seen as an objective of the invention to provide an improved flow detection system with optimised measuring accuracy and comprehensive flow parameter measurements.

The objective is achieved by the subject matter of the independent claims. The dependent claims, the following description and the drawings show embodiments of the invention.

According to a first aspect of the present disclosure, a multifunctional flow measuring system is provided, which comprises a volumetric flow measuring assembly, a density sensing assembly and an evaluation unit. The volumetric flow measuring assembly comprises a measuring tube for connecting to a piping system and is configured to measure a volumic flow rate of a medium in the piping system. The density sensing assembly is configured to measure a density of the medium in the piping system. The evaluation unit is configured to determine, based on the volumic flow rate of the medium measured by the volumetric flow measuring assembly and the density of the medium measured by the density sensing assembly, a mass flow rate of the medium in the piping system.

The term "volumic flow rate" of the medium may be understood as the quantity of fluid volume passing through a defined cross-section of a piping system per unit of time, typically expressed in cubic meters per second (m³/s) or liters per minute (L/min). The volumic flow rate of the medium may be detected or measured in the measuring tube, which may be installed or mounted to the piping system or the pipe as an inline assembly.

The term "mass flow rate" of the medium may be understood as the amount of mass of the medium that flows through a specific cross-section of a piping system per unit of time, typically expressed in kilograms per second (kg/s) or tons per hour (t/h).

The mass flow rate of the medium in the piping system may be determined by multiplying the measured volumic flow rate by the measured density of the medium.

In the multifunctional or multiparameter flow measuring system, the density sensing assembly and the volumetric flow measuring assemby may be arranged along the pipe incorporating the in-line built-in measuring tube. For example, the density sensing assembly may be arranged upstream or downstream of the volumetric flow measuring assembly. In particular, the density sensing assembly may be arranged in the vicinity of the volumetric flow measuring assembly. This may enable enhanced measurement accuracy by ensuring that both the volumic flow rate and the density of the medium are determined under substantially identical flow and process conditions, thereby reducing spatial or temporal measurement discrepancies and improving the precision of the calculated mass flow rate.

According to an embodiment, the volumetric flow measuring assembly may be an electromagnetic flow measuring assembly. The electromagnetic flow measuring assembly of the multifunctional flow measuring system may comprise at least one pair of electromagnetic coils and electrodes and a sensor element that may be arranged in the measuring tube. The at least one pair of electromagnetic coils and electrodes may be configured to generate a magnetic field around the measuring tube and to measure an induced voltage corresponding to the volumic flow rate of the medium during the sensor element flowing within the magnetic field.

Alternatively or additionally to the electromagnetic flow measuring assembly or electromagnetic flowmeter, the volumetric flow measuring assembly may be, but not limited to, a volumetric flowmeter, which may be a vortex flowmeter, a swirl flowmeter, a ultrasonic flowmeter, a turbine flowmeter, a turbine flowmeter, a positive displacement (PD) flowmeter or a differential pressure flowmeter.

For example, a conventional electromagnetic flowmeter may be used for the volume measurement of the medium, but it may reach its limits when it may come to providing other flow or medium properties such as density, viscosity, mass flow or temperature.

Coriolis flowmeters may typically used to combine multiple measured variables. However, the coriolis flowmeters may have limitation such as significantly higher costs due to increased mechanical complexity, pressure drops, size limitations, etc..

The multifunctional flow measuring system may allow an extension of the established electromagnetic or other volumetric flow principle for detection of multiple parameters.

The electromagnetic flow measuring assembly or the electromagnetic flow meter may allow the measuring principle based on the movement of the flowing medium as electrical conductor in the generated magnetic field. Based on the design details of the piping system and the measuring tube, the detailed geometric structure of the magnetic field, as well as its strength and excitation, the movement of the electrical conductor may a voltage that may be proportional to the volumic flow rate. As a result from this measured voltage, the volume flow in the known measuring tube may be determined.

According to another embodiment, the at least one pair of electromagnetic coils and electrodes may be configured to connect to the measuring tube at at least one first connecting position via a first connecting means.

For example, a single pair of electromagnetic coils and electrodes may be provided and arranged around the measuring tube. Alternatively, for example, in case that the the measuring tube may be of a certain length, multiple pairs of electromagnetic coils and electrodes may be arranged along the measuring tube at various connection positions or connection points.

By arranging the at least one pair of electromagnetic coils and electrods around the mearuing tube and incorporating the sensor element within the measuring tube, the multifunctional flow detection system may be capable of generating a controlled magnetic field around the tube. This may advantageously allow the multifunctional flow detection system to accurately convert the induced voltage into a volumic flow rate using known design and calibration parameters of the measuring tube and magnetic field geometry and to perform robust volumic flow measurements with long-term stability. As the electromagnetic measuring principle may supports the high-precision volumic flow detection, which may form the foundational input for the subsequent mass flow calculation for the piping system, particularly when combined with density measurement from the respective detection assembly.

According to another embodiment, the density sensing assembly may be designed as a non-invasive clamp-on device, which may be arranged externally at the measuring tube and mechanically coupled to the measuring tube.

The term "non-invasive" may be understood to refer to a measurement or sensing technique that does not require direct contact with the medium being measured or any penetration or modification of the piping system, thereby preserving the integrity of the process and enabling easy installation and maintenance.

The term "clamp-on device" may be understood broadly as a device that is externally attached to a pipe or conduit, typically using mechanical clamps, without requiring any modification to the pipe itself, and is configured to perform measurements for various flow parameters or characteristics in a non-invasive manner by coupling sensors to the outer surface of the pipe or tube.

Normally, in case that a further density sensing assembly may be provided in addition to the built-in electromagnetic volumic flowmeter and arranged distant therefrom along the pipe, it may be possible that a large number of influencing factors may be taken into account for evaluating the mass flow rate based on the volumic flow rate measured at the connecting point of the electromagnetic flowmeter and the density of the medium at a distant, different connecting point of the density sensing detector. This may result in a reduced accuraty. In order to allow a precise detection and estimation of both the volumic flow rate and the mass flow rate of the medium, it may be preferable to arrange the electromagnetic flowmeter and the density sensing assembly in the vicinity, namely within the same measuring tube. This may result in the highly integrated mulfifunctional flow measuring system with a compact construction.

According to another embodiment, the density sensing assembly may be configured to mechanically excite mechanical vibrations of the measuring tube directly in the electromagnetic flow measuring assembly and to measure an impulse response and/or a damping of the mechanical vibrations of the measuring tube corresponding to the density of the medium flowing in the measuring tube.

For example, the separate density measuring system or coriolis devices may be used, which may determine the density, the mass flow, and the medium temperature

According to another embodiment, the electromagnetic flow measuring assembly and the density sensing assembly may be designed to be an integral one-piece device. Moreover, the whole multifunctional flow measuring system comprising the electromagnetic flow measuring assembly and the density sensing assembly may be configured to be pre-calibrated before the measuring tube may be connected to the piping system.

By integrating both assemblies into a single, factory-calibrated unit, the multifunctional flow measuring system may ensure optimal alignment of components thereby minimizing mechanical tolerances and sensor positioning errors, consistent and reproducible calibration thereby reducing the need for on-site adjustments or recalibration, faster commissioning, as the system is ready for plug-and-play deployment, and reduced risk of installation errors thereby improving measurement quality and long-term stability. The design of the multifunctional flow measuring system of the present disclosure may further result in the compactness and the robust integration, which may be particularly valuable in space-constrained or demanding industrial environments.

According to another embodiment, the density sensing assembly may comprise an actuator and sensor component, a connecting component, and a swing arm component that may be arranged between and connected to the actuator and sensor component and the connecting component. The connecting component may be configured to connect to the measuring tube at a second connecting position of the measuring tube via a second connecting means.

According to another embodiment, the actuator and sensor component, the connecting component and the swing arm component of the density sensing assembly may be configured to form an interior region externally around the measuring tube.

The at least one pair of electromagnetic coils and electrodes may be arranged inside the interior region of the density sensing assembly. Alternatively, the at least one pair of electromagnetic coils and electrodes may be arranged outside the interior region of the density sensing assembly. If multiple pairs of electromagnetic coils and electrodes may be provided, they may be distributed both inside and outside the interior region and along the entire length of the measuring tube, enabling accurate determination of an averaged volumic flow rate across the measurement section.

According to another embodiment, the multifunctional flow measuring system may comprise a temperature sensing assembly that may be configured to measure a temperature of the medium in the piping system.

With the additional temperature measuring assembly, the multifunctional flowmeter may enables temperature-compensated flow and density measurements, thereby increasing the overall accuracy and reliability of the calculated mass flow rate.

According to another embodiment, the temperature sensing assembly may be designed as a second non-invasive clamp-on device, in addition to the first non-invasive clamp-on density sensing assembly. The temperature sensing assembly may be arranged externally at the measuring tube and mechanically coupled to the measuring tube.

The temperature sensing assembly may comprise at least one temperature sensor and may be configured to connect to the measuring tube at at least one third connecting position via at least one third connecting means.

In other words, the temperature sensing assembly may comprise multiple temperature sensors that may be arranged along the measuring tube at multiple third connecting positions via multiple connecting means.

According to another embodiment, the evaluation unit may be configured to compensate for temperature-dependent effects on the volumic flow rate and/or the density of the medium in the piping system, based on the temperature of the medium measured by the temperature sensing assembly.

By accounting for temperature-dependent variations in fluid properties, such as the density and the conductivity, the multifunctional flow detecting system may advantageously reduce measurement errors caused by temperature fluctuations, improve consistency under changing process conditions, and support real-time process monitoring and control with enhanced precision. This may make the detection system particularly well-suited for industrial applications where thermal dynamics of the medium significantly affect flow behavior.

Further, the evaluation unit may be configured to output all the parameters or characteristics of the medium flowing in the piping system, comprising the volumic flow rate, the density, the mass flow rate or the adjusted or compensated mass flow rate.

According to another embodiment, the multifunctional flow measuring system may further comprise a housing, which may be arranged externally at the measuring tube and configured to enclose the electromagnetic flow measuring assembly, the density sensing assembly and the temperature sensing assembly. The electromagnetic flow measuring assembly, the density sensing assembly and the temperature sensing assembly may be designed to be an integral one-piece device and configured to be pre-calibrated before the measuring tube may be connected to the piping system.

By enclosing the electromagnetic, density, and temperature sensing assemblies within a common housing may result in a compact, robust, and fully integrated unit of the multifunctional flow measuring system. This design may enhance mechanical protection, reduce installation complexity, and ensure precise sensor alignment. By enabling factory pre-calibration of the entire one-piece device before connection to the piping system, it may ensure high measurement accuracy, simplifies commissioning, and minimizes the need for on-site adjustments. The integral configuration may also improve the long-term stability and reduce the susceptibility to environmental influences, making the system ideal for demanding industrial applications.

In this way, the multifunctional or multiparameter flow measuring system may be provided as a completely new device type, which may, in addition to the volume flow information of an electromagnetic flow measuring principle, further provide real density and real mass flow information, completely in a non-invasive way. Such a device type may in principle be comparable in function to a typical Coriolis flowmeter, but potentially has further advantages such as shorter installation length, cost advantages due to lower complexity, no pressure drop, straight line flow, etc.

According to a second aspect, there is provided the use of a multifunctional flow measuring system of the present disclosure for real-time monitoring and autonomously regulating a piping system.

The multifunctional flow measuring system of the present disclosure may advantageously result in the integration of the density sensing assembly directly into the electromagnetic flow measuring assembly. The density information obtained in this manner may be combined with the volumic flow rate measured by the electromagnetic flow measuring assembly to accurately determine the mass flow rate of the medium.

Additionally, the temperature sensing assembly may further be included to measure the temperature of the medium in a non-invasive manner, enabling compensation for temperature-dependent effects on the flow and density measurements. This may enable in a high-performance, multifunctional flow measuring system capable of simultaneously determining mass flow, density, volumic flow, and temperatureeffectively bridging the technological gap between standard electromagnetic flowmeters and coriolis flowmeters.

According to another aspect, there is provided a method for monitoring a medium in a piping system. The method comprises the following steps:
- connecting a multifunctional flow measuring system to the piping system, which comprises a volumetric flow measuring assembly, a density sensing assembly and an evaluation unit;
- detecting the medium in the piping system, comprising the substep of measuring, by means of the volumetric flow measuring assembly, a volumic flow rate of a medium and the substep of measuring, by means of the density sensing assembly, a density of the medium;
- determining, by means of the evaluation unit, a mass flow rate of the medium in the piping system based on the volumic flow rate of the medium measured by the volumetric flow measuring assembly and the density of the medium measured by the density sensing assembly.

The volumetric flow measuring assembly may be, but not limited to, an electromagnetic flow measuring assembly or a volumetric flowmeter, which may be a vortex flowmeter, a swirl flowmeter, a ultrasonic flowmeter, a turbine flowmeter, a turbine flowmeter, a positive displacement (PD) flowmeter or a differential pressure flowmeter.

According to an embodiment, the step of detecting the medium in the piping system may further comprise the substep of measuring, by means of a temperature sensing assembly, a temperature of the medium in the piping system.

Further, the method may further comprise the step of compensating, by means of the evaluation unit, for temperature-dependent effects on the volumic flow rate and/or the density of the medium in the piping system, based on the temperature of the medium measured by the temperature sensing assembly, before the mass flow rate of the medium may be determined based on the measured volumic flow rate of the medium and the measured density of the medium.

Further, there may be provided a computer program that comprises machine-readable instructions that, when executed by one or more computers and/or compute instances, cause the one or more data processing apparatuses to perform a method of the present disclosure.

There may be provided a non-transitory machine-readable data carrier and/or a download product with the computer program. A download product is an instance of the computer program that may be sold and downloaded online for immediate fulfilment in lieu of physically shipping a machine-readable data carrier.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

There may be provided a data processing system that is configured to carry out the method of the present disclosure.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.
- Fig. 1: shows schematically an example of a multifunctional flow measuring system in a piping system according to the present disclosure;
- Fig. 2: shows schematically an example of a multifunctional flow measuring system according to the present disclosure;
- Fig. 3: shows schematically an example of a multifunctional flow measuring system according to the present disclosure;
- Fig. 4: shows schematically a flow chart illustrating a method for monitoring a medium in a piping system according to the present disclosure;
- Fig. 5a: shows schematically a side view of a multifunctional flow measuring system according to the present disclosure;
- Fig. 5b: shows schematically another side view of a multifunctional flow measuring system according to the present disclosure;
- Fig. 6a: shows schematically an example of an electromagnetic flow measuring assembly of a multifunctional flow measuring system according to the present disclosure;
- Fig. 6b: shows schematically an example of a density sensing assembly of a multifunctional flow measuring system according to the present disclosure;
- Fig. 6c: shows schematically an example of a temperature sensing assembly of a multifunctional flow measuring system according to the present disclosure;
- Fig. 6d: shows schematically an example of a housing of a multifunctional flow measuring system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

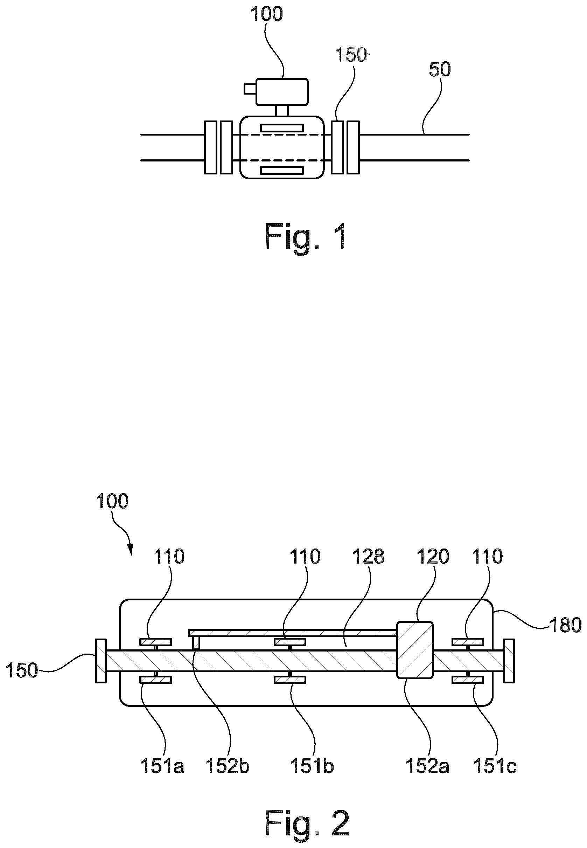

Fig. 1 shows schematically an overview of a multifunctional flow measuring system 100, which is connect to a piping system 50, by connecting the measuring tube 150 of multifunctional flow measuring system 100 with the pipe 50.

Fig. 2 shows schematically the cross-sectional view of the multifunctional flow measuring system 100, which comprises an an electromagnetic flow measuring assembly 110 as a volumetric flow measuring assembly, a density sensing assembly 120 and an evaluation unit (not shown).

The multifunctional flow measuring system 110, comprises a measuring tube 150 for connecting to a piping system 50 and configured to measure a volumic flow rate of a medium in the piping system 50.

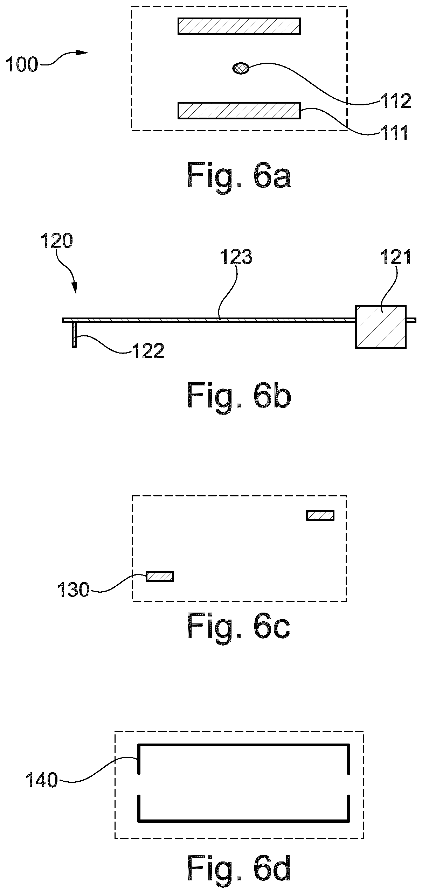

Further, as further shown in Fig. 6a, the electromagnetic flow measuring assembly 110 comprises at least one pair of electromagnetic coils and electrodes 111 and a sensor element 112 arranged in the measuring tube 150. The at least one pair of electromagnetic coils and electrodes 111 are configured to generate a magnetic field around the measuring tube 150 and to measure an induced voltage corresponding to the volumic flow rate of the medium during the sensor element 112 flowing within the magnetic field.

In Fig. 2, the density sensing assembly 120 may be configured to measure a density of the medium in the piping system 50. The evaluation unit may be configured to determine, based on the volumic flow rate of the medium measured by the electromagnetic flow measuring assembly 110 and the density of the medium measured by the density sensing assembly 120, a mass flow rate of the medium in the piping system 50. The density sensing assembly 120 may be designed as a non-invasive clamp-on device, which may be arranged externally at the measuring tube 150 and mechanically coupled to the measuring tube 150. Further, the density sensing assembly 120 may be configured to mechanically excite mechanical vibrations of the measuring tube 150 directly in the electromagnetic flow measuring assembly 110 and to measure an impulse response and/or a damping of the mechanical vibrations of the measuring tube 150 corresponding to the density of the medium flowing in the measuring tube 150.

Fig. 6b shows that the density sensing assembly 120 comprises a connecting component 121, an actuator and sensor component 122 and a swing arm component 123. The swing arm component 123 is arranged between and connected to the actuator and sensor component 122 and the connecting componenet 121.

In Fig. 2, the connecting component 121 of the density sensing assembly 120 may be configured to connect to the measuring tube 150 at a second connecting position 152a of the measuring tube 150 via a second connecting means 125. The actuator and sensor componenet 122 is provided at a sensing position 152b. Around the measuring tube 150, the actuator and sensor component 122, the connecting component 121 and the swing arm component 123 of the density sensing assembly 120 are designed to form an interior region 128 externally around the measuring tube 150.

Further, as shown in Fig. 2, multiple pairs, in particular three pairs, of electromagnetic coils and electrodes of the electromagnetic flow measuring system 111 are provided and arranged along the measuring tube 150 at multiple first connectiong positions 151a, 151b, 151c. In particular, the multiple pairs of electromagnetic coils and electrodes of the electromagnetic flow measuring assembly 110 are distributed inside and outside the interior region 128 and along the entire length of the measuring tube 150, enabling accurate determination of an averaged volumic flow rate across the measurement section.

The multifunctional flow measuring system 100 further comprises a housing 180 (also as shown in Fig. 6d) which encloses both the electromagnetic flow measuring assembly 110 and the density sensing assembly 120. In this way, the electromagnetic flow measuring assembly 110 and the density sensing assembly 120 are designed to be an integral one-piece device and configured to be pre-calibrated before the measuring tube 150 is connected to the piping system 50.

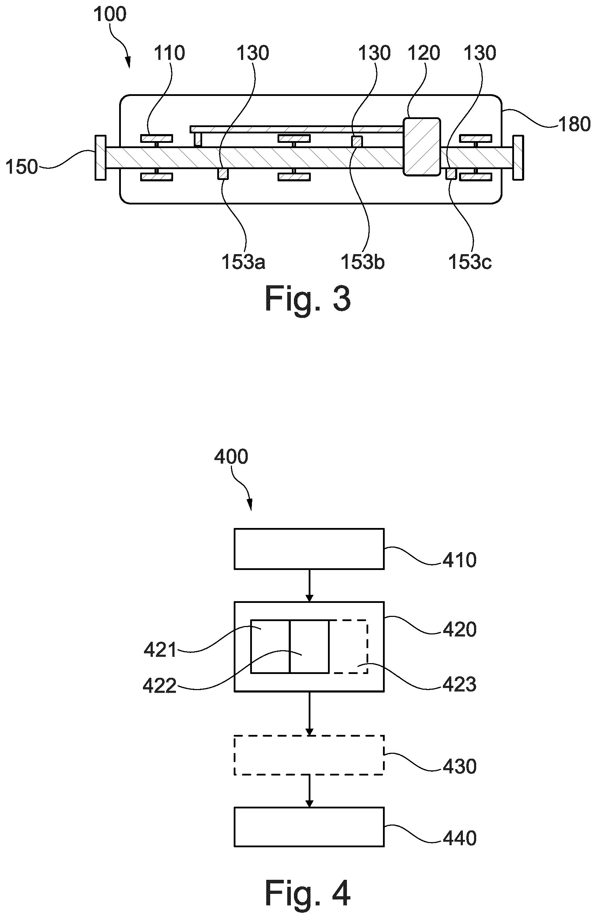

Fig. 3 shows schematically the cross-sectional view of a further example of the multifunctional flow measuring system 100, which comprises a temperature sensing assembly 130, in addition to the electromagnetic flow measuring assembly 110, the density sensing assembly 120 and an evaluation unit. The temperature sensing assembly 130 may be configured to measure a temperature of the medium to be measured in the piping system 50. The temperature sensing assembly 130 is designed as a second non-invasive clamp-on device, which is arranged externally at the measuring tube 150 and mechanically coupled to the measuring tube 150.

In Fig. 3, a housing 180 (also as shown in Fig. 6d) is also provided to enclose the electromagnetic flow measuring assembly 110, the density sensing assembly 120 and the temperature sensing assembly 130. The electromagnetic flow measuring assembly 110, the density sensing assembly 120 and the temperature sensing assembly 130 are designed to be an integral one-piece device and configured to be pre-calibrated before the measuring tube 150 is connected to the piping system 50.

As further shown in Fig. 6c, the temperature sensing assembly 130 comprises one or more temperature sensors and may be configured to connect to the measuring tube 150 at various third connecting positions 153a, 153b, 153c that are arranged inside and outside the interior region 128 defined by the density sensing assembly 120.

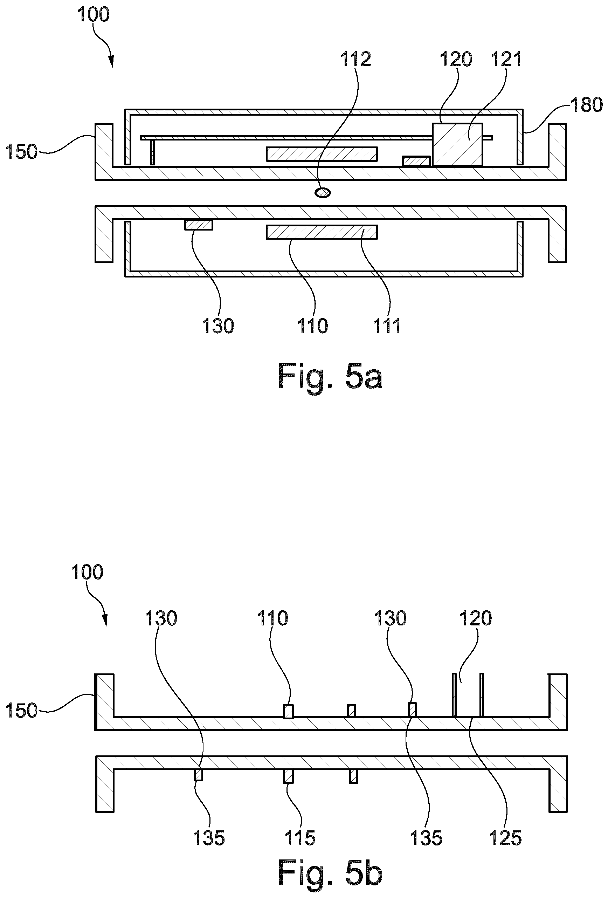

Alternative to the multifunctional flow measuring assembly 100 of Fig. 3 having electromagnetic flow measuring assembly 110 with multiple pairs of electromagnetic coils and electrodes 111, Fig. 5a shows another example of a multifunctional flow measuring assembly 100, which comprise a single pair of electromagnetic coils and electrodes 111. In Fig. 5a, the pair of electromagnetic coils and electrodes 111 of the multifunctional flow measuring assembly 100 is arranged inside the interior region 128 defined by the density sensing assembly 120.

Accordingly, Fig. 5b further shows the arrangement of the the electromagnetic flow measuring assembly 110, the density sensing assembly 120 and the temperature sensing assembly 130 of the multifunctional flow measuring assembly 100 along the measuring tube 150. The single pair of electromagnetic coils and electrodes 111 is configured to connect to the measuring tube 150 at the first connecting position 151b via a first connecting means 115. The connecting component 121 of the density sensing assembly 120 is connected to the measuring tube 150 at the second connecting position 152a of the measuring tube 150 via a second connecting means 125. The temperature sensing assembly 130 is connected to the measuring tube 150 at the third connecting positions 153a, 153b via a third connecting means 135.

Further, the evaluation unit may further be configured to compensate for temperature-dependent effects on the volumic flow rate and/or the density of the medium in the piping system 50, based on the temperature of the medium measured by the temperature sensing assembly 130. Further, the evaluation unit may be configured to output all the parameters or characteristics of the medium flowing in the piping system 50, comprising the volumic flow rate, the density, the mass flow rate or the adjusted or compensated mass flow rate.

Fig. 4 shows schematically a flow chart illustrating a method 400 for monitoring a medium in a piping system 50. The method 400 comprises a plurality of steps.

In a step 410, a multifunctional flow measuring system 100 may be connected to the piping system 50, which comprises an electromagnetic flow measuring assembly 110, a density sensing assembly 120 and an evaluation unit.

In a step 420, the medium in the piping system 50 may be detected by a substep 421, in which a volumic flow rate of the medium may be measured by means of the electromagnetic flow measuring assembly 110, followed by a substep 422, in which a density of the medium may be measured by means of the density sensing assembly 120. Optionally, the step 420 may further comprise a substep 423, in which a temperature of the medium in the piping system 50 may be measured by means of a temperature sensing assembly 130.

In a step 440, a mass flow rate of the medium in the piping system 50 may be determined, by means of the evaluation unit, based on the volumic flow rate of the medium measured by the electromagnetic flow measuring assembly 110 and the density of the medium measured by the density sensing assembly 120.

Optionally, prior to or after the step 440, a step 430 may be provided, in which there may be compensated, by means of the evaluation unit, for temperature-dependent effects on the volumic flow rate and/or the density of the medium in the piping system 50, based on the temperature of the medium measured by the temperature sensing assembly 130.

Further, the evaluation unit may output all the parameters or characteristics of the medium flowing in the piping system 50, comprising the volumic flow rate, the density, the mass flow rate or the adjusted or compensated mass flow rate.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 50: piping system
- 100: multifunctional flow measuring system
- 110: volumetric or electromagnetic flow measuring assembly
- 111: electromagnetic coils and electrodes
- 112: sensor element
- 115: first connecting means
- 120: density sensing assembly
- 121: connecting component
- 122: actuator and sensor component
- 123: swing arm component
- 125: second connecting means
- 128: interior region
- 130: temperature sensing assembly
- 135: third connecting means
- 150: measuring tube
- 151a-c: first connectiong position
- 152a: second connecting position
- 152b: sensing position
- 153a-c: third connecting position
- 180: housing
- 400: method for monitoring a medium in a piping system
- 410: step of connecting a multifunctional flow measuring system to a piping system
- 420: step of detecting a medium in a piping system
- 421: step of measuring a volumic flow rate of a medium
- 422: step of measuring a density on the medium
- 423: step of a temperature of a medium
- 430: step of compensating for temperature-dependent effects
- 440: step of determining a mass flow rate of a medium

## Claims

1. Multifunctional flow measuring system (100), comprising:
a volumetric flow measuring assembly (110), comprising a measuring tube (150) for connecting to a piping system (50) and configured to measure a volumic flow rate of a medium in the piping system (50); and
a density sensing assembly (120), configured to measure a density of the medium in the piping system (50); and
an evaluation unit, configured to determine, based on the volumic flow rate of the medium measured by the volumetric flow measuring assembly (110) and the density of the medium measured by the density sensing assembly (120), a mass flow rate of the medium in the piping system (50).

2. The multifunctional flow measuring system (100) according to claim 1,
wherein the volumetric flow measuring assembly (110) is an electromagnetic flow measuring assembly;
wherein the electromagnetic flow measuring assembly (110) comprises
at least one pair of electromagnetic coils and electrodes (111),
a sensor element (112) arranged in the measuring tube (150);
wherein the at least one pair of electromagnetic coils and electrodes (111) are configured to generate a magnetic field around the measuring tube (150) and to measure an induced voltage corresponding to the volumic flow rate of the medium during the sensor element (112) flowing within the magnetic field.

3. The multifunctional flow measuring system (100) according to claim 2,
wherein the at least one pair of electromagnetic coils and electrodes (111) are configured to connect to the measuring tube (150) at at least one first connecting position (151a, 151b, 151c) via a first connecting means (115).

4. The multifunctional flow measuring system (100) according to any of the preceding claims,
wherein the density sensing assembly (120) comprises at least one density sensing element and is designed as a non-invasive clamp-on device, which is arranged externally at the measuring tube (150) and mechanically coupled to the measuring tube (150).

5. The multifunctional flow measuring system (100) according to any of the preceding claims,
wherein the density sensing assembly (120) is configured to mechanically excite mechanical vibrations of the measuring tube (150) directly in the electromagnetic flow measuring assembly (110) and to measure an impulse response and/or a damping of the mechanical vibrations of the measuring tube (150) corresponding to the density of the medium flowing in the measuring tube (150).

6. The multifunctional flow measuring system (100) according to any of the preceding claims,
wherein the electromagnetic flow measuring assembly (110) and the density sensing assembly (120) are designed to be an integral one-piece device and configured to be pre-calibrated before the measuring tube (150) is connected to the piping system (50).

7. The multifunctional flow measuring system (100) according to any of the preceding claims,
wherein the density sensing assembly (120) comprises
an actuator and sensor component (122),
a connecting component (121), and
a swing arm component (123), arranged between and connected to the actuator and sensor component (122) and the connecting component (121);
wherein the connecting component (121) is configured to connect to the measuring tube (150) at a second connecting position (152a) of the measuring tube (150) via a second connecting means (125).

8. The multifunctional flow measuring system (100) according to claim 7,
wherein the actuator and sensor component (122), the connecting component (121) and the swing arm component (123) of the density sensing assembly (120) are configured to form an interior region (128) externally around the measuring tube (150);
wherein the at least one pair of electromagnetic coils and electrodes (111) are arranged inside or outside the interior region (128) of the density sensing assembly (120).

9. The multifunctional flow measuring system (100) according to any of the preceding claims, further comprising:
a temperature sensing assembly (130), configured to measure a temperature of the medium in the piping system (50).

10. The multifunctional flow measuring system (100) according to claim 9,
wherein the temperature sensing assembly (130) is designed as a second non-invasive clamp-on device, which is arranged externally at the measuring tube (150) and mechanically coupled to the measuring tube (150);
wherein the temperature sensing assembly (130) comprises at least one temperature sensor and is configured to connect to the measuring tube (150) at at least one third connecting position (153a, 153b, 153c) via at least one third connecting means (135).

11. The multifunctional flow measuring system (100) according to claim 9 or 10,
wherein the evaluation unit is configured to compensate for temperature-dependent effects on the volumic flow rate and/or the density of the medium in the piping system (50), based on the temperature of the medium measured by the temperature sensing assembly (130).

12. The multifunctional flow measuring system (100) according to any of the preceding claims 9 to 11, further comprising:
a housing (180);
wherein the housing (180) is arranged externally at the measuring tube (150) and configured to enclose the electromagnetic flow measuring assembly (110), the density sensing assembly (120) and the temperature sensing assembly (130);
wherein the electromagnetic flow measuring assembly (110), the density sensing assembly (120) and the temperature sensing assembly (130) are designed to be an integral one-piece device and configured to be pre-calibrated before the measuring tube (150) is connected to the piping system (50).

13. Use of a multifunctional flow measuring system (100) according to any of the preceding claims for real-time monitoring.

14. Method (400) for monitoring a medium in a piping system (50), comprising the steps of:
connecting (410) a multifunctional flow measuring system (100) to the piping system (50), which comprises a volumetric flow measuring assembly (110), a density sensing assembly (120) and an evaluation unit;
detecting (420) the medium in the piping system (50) comprising the substeps of:
measuring (421), by means of the volumetric flow measuring assembly (110), a volumic flow rate of the medium; and
measuring (422), by means of the density sensing assembly (120), a density of the medium;
determining (440), by means of the evaluation unit, a mass flow rate of the medium in the piping system (50) based on the volumic flow rate of the medium measured by the volumetric flow measuring assembly (110) and the density of the medium measured by the density sensing assembly (120).

15. The method (400) according to claim 14,
wherein the detecting (420) the medium in the piping system (50) further comprising the substep of:
measuring (423), by means of a temperature sensing assembly (130), a temperature of the medium in the piping system (50);
wherein the method further comprises the step of:
compensating (430), by means of the evaluation unit, for temperature-dependent effects on the volumic flow rate and/or the density of the medium in the piping system (50), based on the temperature of the medium measured by the temperature sensing assembly (130).
